# EUROPÄISCHE PATENTANMELDUNG

(11) **EP 0 616 978 A1**
(43) Veröffentlichungstag der Anmeldung: **28.09.1994**
(21) Anmeldenummer: 94103661.8
(22) Anmeldetag: 10.03.1994
(51) Int. Cl.: C02F 1/52, C02F 3/12

(54) **Verfahren und Fällungsmittel zur Abtrennung von organischen Verunreinigungen aus einem Abwasser**

(30) Priorität: 25.03.1993 DE 4309666
(71) Anmelder: STEAG AG, D-45128 Essen (DE)
(72) Erfinder: Steden, Martin, Dr. Dipl.-Biologe, D-44807 Bochum (DE); Wasko, Uwe, Dipl.-Ing., D-44894 Bochum (DE)

(57) **Zusammenfassung**

Bei dem Verfahren zur Abtrennung von organischen Verunreinigungen, insbesondere von Biomasse und biologisch nicht abbaubaren Substanzen, aus einem Abwasser werden dem Abwasser Fällungs- und Flockungshilfsmittel zugesetzt, wobei als Fällungsmittel eine Kombination löslicher Eisen- und Aluminiumverbindungen verwendet wird. Ausgehend von einem Abwasser mit einem CSB von ca. 1300 mg/l wird als Fällungsmittel eine solche Kombination von Eisen-III- und Aluminium-III-chlorid verwendet, mit der Konzentrationen von etwa 650 mg/l Fe³⁺- und etwa 200 mg/l Al³⁺-Ionen eingestellt werden. In Abhängigkeit vom Feststoffgehalt im Abwasser wird Flockungshilfsmittel in einer Menge zugesetzt, die einer Konzentration im Abwasser im Bereich von 0,1-3,0 mg/l entspricht. Dabei wird ein pH-Wert im Bereich von etwa 6,0 eingestellt. Durch das Zusetzen einer Aluminiumverbindung zusätzlich zu der Eisenverbindung kann die Konzentration des Eisens bei gleichbleibend guter CSB-Verringerung überproportional reduziert werden; außerdem verbessert sich die Flockenstruktur.

## Beschreibung

Die Erfindung betrifft ein Verfahren zur Abtrennung von organischen Verunreinigungen, insbesondere von Biomasse und biologisch nicht abbaubaren Substanzen, aus einem Abwasser, wobei dem Abwasser Fällungs- und Flockungshilfsmittel zugesetzt werden bzw. ein Fällungsmittel zum Fällen dieser Verunreinigungen.

Zur Reinigung organisch belasteter hochkonzentrierter Abwässer verwendet man gegenwärtig u.a. eine biologische Vorreinigung, bei der mit Hilfe von Mikroorganismen ein Teil der Abwasser-Inhaltsstoffe biologisch abgebaut wird (DE-OS 32 27 488). Mit einem solchen partiell-aeroben Verfahren wird ein großer Teil der biologisch abbaubaren Inhaltsstoffe veratmet, was zu einer Reduzierung des CSB (chemischen Sauerstoffbedarfs) um etwa 50% führt. Der verbleibende Rest der organischen Verunreinigungen (die einen CSB bewirken) besteht überwiegend aus Biomasse und biologisch nicht abbaubaren Substanzen (Huminstoffe u.a.). Für eine weitergehende Reinigung müssen diese Substanzen unter Zugabe von Fällungsmitteln und Flockungshilfsmitteln abgetrennt werden.

Als Fällungsmittel zum Fällen der Biomasse und der biologisch nicht abbaubaren Substanzen werden üblicherweise Eisen-III-verbindungen eingesetzt. Dabei sind erhebliche Mengen erforderlich. Soll der CSB des biologisch vorgereinigten Abwassers beispielsweise von etwa 13000 mg/l auf etwa 1500 mg/l verringert werden, so ist eine Zugabe von Eisen-III-verbindungen in einer Menge erforderlich, die einer Konzentration von 1200 mg/l Fe³⁺ im Abwasser entspricht.

Aufgabe der Erfindung ist es, bei einem Verfahren der o.g. Art die Menge des eingesetzten Fällungsmittels bei gleicher Fällungswirkung zu verringern.

Bei einem Verfahren der o.g. Art wird diese Aufgabe erfindungsgemäß dadurch gelost, daß als Fällungsmittel eine Kombination löslicher Eisen- und Aluminiumverbindungen verwendet wird. Wenn zusätzlich zu der Eisenverbindung dem Abwasser eine Aluminiumverbindung zugegeben wird, so kann die Konzentration des Eisens bei gleichbleibend guter CSB-Verringerung überproportional reduziert werden. Es gelingt daher, die Gesamtmenge des aus Eisen- und Aluminiumverbindungen bestehenden Fällungsmittels deutlich zu reduzieren. Überraschenderweise verbessert sich auch die Flockenstruktur, d.h. die ausgefällten Verunreinigungen werden großflockiger.

Vorzugsweise werden Eisen-III- und Aluminium-III-verbindungen, insbesondere Eisen-III-chlorid und Aluminium-III-chlorid verwendet. Wenn das Abwasser Biomasse und biologisch nicht abbaubare Substanzen in einer Konzentration enthält, die einem CSB-Wert im Bereich von 10000 mg/l bis 15000 mg/l entsprechen, ist es vorteilhaft, daß als Fällungsmittel eine solche Kombination von Eisen-III- und Aluminium-III-verbindungen verwendet wird, mit der Konzentrationen im Bereich von 500-1000 mg/l, vorzugsweise 620-680 mg/l Fe³⁺-Ionen und 100-300 mg/l, vorzugsweise 180-220 mg/l Al³⁺-Ionen eingestellt werden. In Versuchsreihen wurden günstige Konzentrationen bei 650 mg/l Fe³⁺ und 200 mg/l Al³⁺ gefunden, bei denen der CSB auf unter 1500 mg/l reduziert werden konnte. Die Gesamtmenge des dabei zugegebenen Fällungsmittels entsprach also ca. 850 mg/l Metall-Ionen. Die gleiche Fällungswirksamkeit würde bei Einsatz von Eisen-III-chlorid eine Fällungsmittelmenge von ca. 1200 mg/l Fe³⁺ bedingen.

Vorteilhaft ist es, daß in Abhängigkeit vom Feststoffgehalt im Abwasser das Flockungshilfsmittel (FHM) in einer Menge zugesetzt wird, die einer Konzentration im Abwasser im Bereich von 0,1-3,0 mg/l, vorzugsweise ca. 2 mg/l entspricht. Dabei wird bei der Ausfällung der Verunreinigungen ein pH-Wert im Bereich von 5,0-9,0, vorzugsweise 6,0 eingestellt. Die Zugabe von Flockungshilfsmitteln führt bei optimierten Fällungsbedingungen zu einer deutlich verbesserten Flockenbildung und einer Verringerung der Sedimentationszeit. Ein pH-Wert im leicht sauren Bereich hat eine fördernde Wirkung auf die absorptive Wirkung von Eisen, und ein pH-Wert im alkalischen Bereich verbessert die Flockenstruktur. Unter optimierten Bedingungen ist in Abhängigkeit vom pH-Wert eine Abtrennung von farbgebenden organischen Substanzen durch Fällung erreichbar.

Eine vorteilhafte Weiterbildung der Erfindung ist dadurch gekennzeichnet, daß das Abwasser einem Reaktionsbehälter zugeführt wird, daß das Fällungsmittel und das Flockungshilfsmittel dem Inhalt des Reaktionsbehälters zugesetzt werden, daß das Abwassser, das Fällungsmittel und das Flockungshilfsmittel im Reaktionsbehälter durchmischt werden, wobei unter Flockenbildung zumindest ein Teil der organischen Verunreinigungen ausgefällt wird, daß anschließend zumindest ein Teil des Inhalts des Reaktionsbehälters abgeführt wird, und daß aus dem abgeführten Teil des Inhalts des Reaktionsbehälters die ausgefällten Verunreinigungen zumindest teilweise abgetrennt werden. Im Reaktionsbehälter wirken Fällungsmittel und Flockungshilfsmittel in der zur Reaktion erforderlichen Zeit auf das zu reinigende Abwasser ein. Die Durchmischung verbessert die Reaktionsbedingungen. Die Durchmischung kann mittels eines Rührwerks erfolgen; sie ist auch deshalb zweckmäßig, weil in dem Reaktionsbehälter kein Absetzen der ausgefällten Verunreinigungen stattfinden soll. Das Abwasser mit den ausgefällten Verunreinigungen wird aus dem Reaktionsbehälter abgeführt. Anschließend werden die ausgefällten Verunreinigungen vorzugsweise durch Sedimentation abgetrennt, wobei sich ein Schlamm absetzt. Der Schlamm wird dann abgeführt. Die Sedimentation (d.h. das Absetzen der ausgefällten Verunreinigungen als Schlamm) findet in einem zweiten Behälter statt. Aus diesem zweiten Behälter wird schließlich das gereinigte Wasser entnommen.

Bei der Fällung der Biomasse und der biologisch nicht abbaubaren Substanzen fallen erhebliche Schlammengen an. Bei Verwendung von unverdünntem Abwasser erschweren die voluminösen Schlammengen eine optimale Durchmischung und Reaktion mit den eingesetzten Chemikalien (Fällungsmittel, Flockungshilfsmittel). Deshalb sieht eine Weiterbildung der Erfindung vor, daß das zugeführte Abwasser verdünnt wird, indem ihm gereinigtes Wasser beigemischt wird.

Vorteilhafte Weiterbildungen des erfindungsgemäßen Verfahrens sind in den Unteransprüchen gekennzeichnet.

Das erfindungsgemäße Fällungsmittel zum Fällen organischer Verunreinigungen, insbesondere von Biomasse und biologisch nicht abbaubaren Substanzen aus einem Abwasser enthält eine Kombination von löslichen Eisen- und Aluminiumverbindungen. Vorteilhafterweise weist es eine Kombination von Eisen-III- und Aluminium-III-verbindungen, vorzugsweise -chlorid auf mit einem Konzentrationsverhältnis von 3-4 Teilen Fe³⁺ zu einem Teil Al³⁺. Das erfindungsgemäße Fällungsmittel begünstigt die Flockenstruktur bei gleichzeitiger Abnahme der Sedimentationszeit.

Im folgenden wird die Erfindung anhand eines Ausführungsbeispiels näher erläutert.

In dem Ausführungsbeispiel wird das erfindungsgemäße Verfahren zur weitergehenden Reinigung eines biologisch vorgereinigten Abwassers verwendet. Ein organisch hoch belastetes Abwasser wird mit Hilfe eines partiell-aeroben Verfahrens biologisch vorgereinigt. Durch Veratmung wird der CSB-Wert auf etwa 50% des Ausgangswerts gesenkt. Der verbleibende CSB-Wert beruht auf Verunreinigungen durch Biomasse und biologisch nicht abbaubare Substanzen (Huminstoffe und andere). Zur weiteren Reinigung werden diese verbleibenden Verunreinigungen durch Zugabe von Fällungsmitteln und Flockungshilfsmitteln gefällt und anschließend abgetrennt.

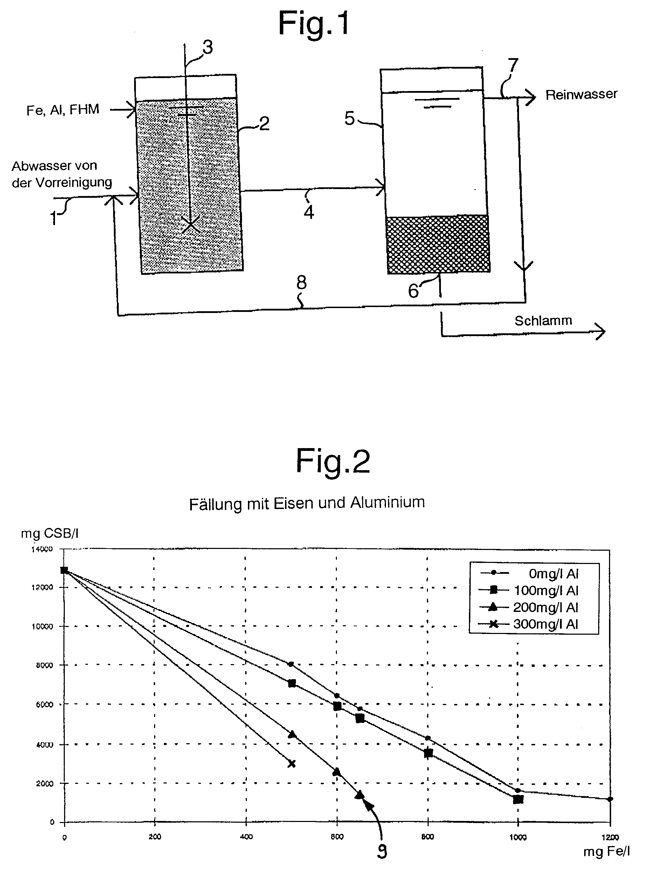

In Fig. 1 ist eine Anordnung zur Durchführung des erfindungsgemäßen Verfahrens der weitergehenden Reinigung schematisch dargestellt. Das die Vorreinigung verlassende Abwasser gelangt über Leitung 1 in einen Reaktionsbehälter 2. Dem Inhalt des Reaktionsbehälters 2 werden Eisenverbindungen, Aluminiumverbindungen und Flockungshilfsmittel zugegeben. Ein Rührwerk 3 sorgt für eine optimale Durchmischung der Reaktionspartner. Im Reaktionsbehälter 2 findet die Fällung der Biomasse und der biologisch nicht abbaubaren Substanzen statt. Das mit den ausgefällten Verunreinigungen durchmischte Abwasser gelangt über eine Leitung 4 aus dem Reaktionsbehälter 2 in einen Absetz-Behälter 5. In diesem Behälter 5 verbleibt das Abwasser, bis sich die ausgefällten Verunreinigungen als Schlamm am Boden abgesetzt haben. Der Schlamm wird über eine Einrichtung 6 am Boden des Behälters 5 entfernt. Das gereinigte Abwasser kann über Leitung 7 entnommen werden. Ein Teil des gereinigten Abwassers wird über Leitung 8 dem in den Reaktionsbehälter eingeführten Abwasser zugesetzt, um das Abwasser zu verdünnen. Bei Verwendung von unverdünntem Abwasser erschweren die voluminösen Schlammengen, die bei der Fällung entstehen, eine optimale Durchmischung und Reaktion mit den eingesetzten Fällungs- und Flockungshilfsmitteln. Deshalb ist es im bevorzugten Ausführungsbeispiel vorgesehen, daß jeweils ein Teil Abwasser mit zwei Teilen gereinigtem Wasser verdünnt wird.

Im bevorzugten Ausführungsbeispiel stellt das Fällungsmittel eine Kombination von Eisen-III-chlorid und Aluminium-III-chlorid dar. Der Einfluß der Konzentrationen der Eisen- und der Aluminiumverbindungen auf die Reduzierung des CSB ist in Fig. 2 dargestellt. Fig. 2 ist zu entnehmen, daß in Gegenwart von Aluminium die Eisenkonzentration bei gleichbleibend guter CSB-Verringerung reduziert werden kann. Die optimale Konzentration liegt im Punkt 9 bei 650 mg/l Fe³⁺ und 200 mg/l Al³⁺. Mit diesen Konzentrationen kann der CSB bis auf unter 1500 mg/l reduziert werden (bei einer Anfangskonzentration des CSB im Abwasser von 13000 mg/l).

Zur optimalen Flockenausbildung wird ein Flockungshilfsmittel zugesetzt. Bei Konzentrationen von 650 mg/l Fe³⁺ und 200 mg/l Al³⁺ erreichte die Flockenbildung ihr Optimum bei einer Flockenhilfsmittel-Konzentration von 2 mg/l. Mit der besseren Flockenbildung erhöht sich die Reinigungsleistung und die Sedimentationsgeschwindigkeit. Die Zugabe des Flockungshilfsmittels ist von der Art der Konzentration der Verunreinigungen des Abwassers abhängig und muß auf die Inhaltsstoffe abgestimmt werden.

Ferner hat der pH-Wert während der Fällungsreaktion einen Einfluß auf die Ausbildung der Flocken, die Sedimentation und die Abtrennung farbgebender organischer Inhaltsstoffe. Ein pH-Wert im leicht sauren Bereich hat eine fördernde Wirkung auf die absorptive Wirkung des Eisens und ein pH-Wert im alkalischen Bereich verbessert die Flockenstruktur. Mit zunehmendem pH-Wert nehmen die CSB-Konzentration und auch die Färbung aufgrund organischer Verbindungen zu. Außerdem werden die farbgebenden organischen Verbindungen mit zunehmendem pH-Wert wieder aus dem gefällten Schlamm herausgelöst. Im bevorzugten Ausführungsbeispiel wird deshalb zunächst ein pH-Wert von 6,0 (im leicht sauren Bereich) eingestellt. Nach Abtrennung des Schlammes kann der pH-Wert des gereinigten Abwassers ohne Veränderung der Farbe wieder angehoben werden. Zum Zweck des Anhebens des pH-Werts kann beispielsweise Ca(OH)₂ zugegeben werden.

In den Tabellen 1 bis 4 sind die Ergebnisse der Reinigung eines Abwassers mit einer CSB-Konzentration von 1300 mg/l in Abhängigkeit von den Konzentrationen der Eisen- und Aluminiumverbindungen und des Flockungshilfsmittels sowie des pH-Wertes dargestellt. Zur Bewertung der Reinigungsleistung wurden die verbliebene CSB-Konzentration gemessen, die Farbe des Abwassers und die Flockenform bestimmt sowie die Sedimentationszeit (bzw. -geschwindigkeit) gemessen.

Tabelle 1 zeigt den Einfluß der Eisen- und der Aluminium-Konzentration auf die Reinigung. Tabelle 1 ist zu entnehmen, daß eine geringe Aluminiumzugabe die für einen CSB-Restwert von 1100-1300 mg/l erforderliche Eisenmenge erheblich verringert und außerdem gröbere Flocken erzeugt und die Sedimentationszeit deutlich verkürzt.

Tabelle 2 zeigt den Einfluß des Flockungshilfsmittels (FHM) im Konzentrationsbereich von 0-2 mg/l. Die Zugabe von Flockungshilfsmittel verbessert die Reinigung (CSB-Wert sinkt), entfärbt das Abwasser und verkürzt die Sedimentationszeit.

Tabelle 3 zeigt den Einfluß des pH-Wertes im Bereich von 6,0-8,0. Ein leicht saurer pH-Wert (von 6,0) verbessert die Reinigungswirkung (geringerer CSB-Wert und hellere Färbung). Der pH-Wert hat aber keinen Einfluß auf die Sedimentationszeit.

Tabelle 4 zeigt den Einfluß der Aluminiumkonzentration und der Konzentration des Flockungshilfsmittels auf die Sedimentationszeit. Die Sedimentationszeit verringert sich sowohl bei wachsender Konzentration des Aluminiums als auch bei wachsender Konzentration des Flockungshilfsmittels.

**Tabelle 1**

| **Konzentration von Eisen bzw. Aluminium** | | | | | |
|---|---|---|---|---|---|
| Eisen | Aluminium | CSB | Farbe | Flocke | Sedimentationszeit |
| 1200 mg/l | 0 mg/l | 1100 mg/l | gelb-klar | fein | 500 s |
| 1000 mg/l | 100 mg/l | 1200 mg/l | gelb-klar | fein | 300 s |
| 650 mg/l | 200 mg/l | 1300 mg/l | gelb-klar | grob | 60 s |
| 500 mg/l | 300 mg/l | 3000 mg/l | braun-klar | grob | 60 s |

**Tabelle 2**

| **Einfluß des Flockungshilfsmittels** | | | |
|---|---|---|---|
| FHM | CSB | Farbe | Sedimentationszeit |
| 0 mg/l | 8000 mg/l | dunkelbraun | >500 s |
| 1 mg/l | 2300 mg/l | hellbraun-klar | 150 s |
| 2 mg/l | 1300 mg/l | gelb-klar | 30 s |

**Tabelle 3**

| **Einfluß des pH-Wertes** | | | |
|---|---|---|---|
| pH | CSB | Farbe | Sedimentationszeit |
| 6 | 1300 mg/l | gelb-klar | 30 s |
| 7 | 2000 mg/l | hellbraun-klar | 30 s |
| 8 | 2200 mg/l | hellbraun-klar | 30 s |

**Tabelle 4**

| **Sedimentationszeit** | | | | | |
|---|---|---|---|---|---|
| Aluminium | FHM | CSB | Farbe | Flocke | Sedimentationszeit |
| 100 mg/l | 1 mg/l | 1700 mg/l | gelb-klar | fein | 500 s |
| 100 mg/l | 2 mg/l | 1500 mg/l | hellbraun-klar | fein | 300 s |
| 200 mg/l | 1 mg/l | 2300 mg/l | hellbraun-klar | fein | 150 s |
| 200 mg/l | 2 mg/l | 1300 mg/l | gelb-klar | grob | 30 s |

Im Rahmen des Erfindungsgedankens sind zahlreiche Verfahrensabwandlungen denkbar. In Abhängigkeit von der Art und Konzentration der organischen Verunreinigungen in dem zu reinigenden Abwasser können die optimalen Konzentrationen variieren. Je stärker das Abwasser verunreinigt ist, desto mehr Fällungsmittel (Eisen- und Aluminiumverbindungen) müssen zugegeben werden. Andererseits kann in Abhängigkeit von der Art der Verunreinigung das Verhältnis der Konzentration der Eisenverbindungen zur Konzentration der Aluminiumverbindungen variieren. Ebenso muß die Zugabe von Flockungshilfsmittel auf die Inhaltsstoffe abgestimmt werden und muß ggf. über 2 mg/l erhöht werden.

Auch ist es denkbar, daß anstelle der Eisen-III-verbindungen andere Eisenverbindungen Verwendung finden.

## Patentansprüche

1. Verfahren zur Abtrennung von organischen Verunreinigungen, insbesondere von Biomasse und biologisch nicht abbaubaren Substanzen, aus einem Abwasser,
wobei dem Abwasser Fällungs- und Flockungshilfsmittel zugesetzt werden,
**dadurch gekennzeichnet,**
daß das Abwasser einem Reaktionsbehälter zugeführt wird,
daß dem Reaktionsbehälter das Fällungsmittel in Form einer Kombination löslicher Eisen- und Aluminiumverbindungen und das Flockungshilfsmittel zugesetzt werden,
daß das Abwasser, das Fällungsmittel und das Flockungshilfsmittel im Reaktionsbehälter durchmischt werden, wobei unter Flockenbildung zumindest ein Teil der organischen Verunreinigungen ausgefällt wird,
daß anschließend zumindest ein Teil des Inhalts des Reaktionsbehälters abgeführt wird, und
daß aus dem abgeführten Teil des Inhalts des Reaktionsbehälters die ausgefällten Verunreinigungen zumindest teilweise abgetrennt werden.

2. Verfahren nach Anspruch 1, dadurch gekennzeichnet, daß als Fällungsmittel eine Kombination einer Eisen-III-verbindung, insbesondere Eisen-III-chlorid, und einer Aluminium-III-verbindung, insbesondere Aluminium-III-chlorid, verwendet wird.

3. Verfahren nach Anspruch 2, dadurch gekennzeichnet, daß von einem Abwasser mit einem CSB im Bereich von 10000 mg/l bis 15000 mg/l ausgegangen, und
als Fällungsmittel eine solche Kombination von Eisen-III- und Aluminium-III-verbindungen verwendet wird, mit der Konzentrationen im Bereich von 500-1000 mg/l, vorzugsweise 620-680 mg/l Fe³⁺-Ionen und 100-300 mg/l, vorzugsweise 180-220 mg/l Al³⁺-Ionen eingestellt werden.

4. Verfahren nach einem der Ansprüche 1 bis 3, dadurch gekennzeichnet, daß das Flockungshilfsmittel in einer Menge zugesetzt wird, die zu einer Konzentration im Bereich von 0,1-3 mg/l, vorzugsweise nahe 2 mg/l führt.

5. Verfahren nach einem der Ansprüche 1 bis 4, dadurch gekennzeichnet, daß bei der Ausfällung der Verunreinigungen ein pH-Wert im Bereich von 5,0-9,0, vorzugsweise ca. 5,0 eingestellt wird.

6. Verfahren nach einem der Ansprüche 2 bis 5, dadurch gekennzeichnet, daß als Fällungsmittel eine Kombination von Eisen-III-chlorid und Aluminium-III-chlorid mit einem Konzentrationsverhältnis von 3-4 Teilen Fe³⁺ zu einem Teil Al³⁺ verwendet wird.

7. Verfahren nach einem der Ansprüche 1 bis 6, dadurch gekennzeichnet, daß das zugeführte Abwasser verdünnt wird, indem ihm gereinigtes Wasser beigemischt wird.

8. Verfahren nach einem der Ansprüche 1 bis 7, dadurch gekennzeichnet, daß die ausgefällten Verunreinigungen durch Sedimentation abgetrennt werden, wobei sich ein Schlamm absetzt, und daß der Schlamm abgeführt wird.

9. Verfahren nach Anspruch 8, dadurch gekennzeichnet, daß nach Abführen des Schlamms der pH-Wert des gereinigten Abwassers auf einen Wert zwischen 7,5 und 8,5 angehoben wird.
